(19) **Europäisches Patentamt**

**European Patent Office**

**Office européen des brevets**

(11) **EP 1 296 274 A2**

(12) **EUROPEAN PATENT APPLICATION**

(43) Date of publication:
26.03.2003 Bulletin 2003/13

(51) Int Cl.⁷: $G06F\ 17/60$

(21) Application number: **02256573.3**

(22) Date of filing: **20.09.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI** | (72) Inventor: **Salle, Mathias Jean Rene**<br>**Palo Alto, CA 94306 (US)** |
| (30) Priority: **21.09.2001 GB 0122880** | (74) Representative: **Lawrence, Richard Anthony et al**<br>**Hewlett-Packard Limited,**<br>**IP Section,**<br>**Building 3,**<br>**Filton Road**<br>**Stoke Gifford, Bristol BS34 8QZ (GB)** |
| (71) Applicant: **Hewlett-Packard Company**<br>**Palo Alto, CA 94304 (US)** | |

(54) **A method of resource allocation using electronic contracts**

(57)     A method of optimising the allocation of resources by a supplier in the event of the supplier being unable to fulfil one or more of a plurality of contractual obligations, the contractual obligations being defined in electronic contracts, and the method being performed by processing means and comprising: (a) determining the resources due to be allocated in order to fulfil each contractual obligation; (b) determining the gain to the supplier in respect of each contractual obligation were it to be fulfilled; (c) determining the penalty that would be incurred by the supplier in respect of each contractual obligation were it not to be fulfilled; and (d) determining the combination of contractual obligations for which their fulfilment, by the allocation of the said resources, would give the greatest utility to the supplier, utility being defined as the total gain to the supplier as a result of resources allocated minus the total penalty incurred by the supplier as a consequence of unfulfilled contractual obligations. This advantageously provides an automated process by which the utility obtainable by a supplier, from the allocation of limited resources, may be optimised. Optionally, the method further comprises anticipating future resources that will be available to the supplier at some future time, and taking into account the anticipated future resources in determining the combination of contractual obligations for which their fulfilment, at the present time or in the future, would maximise the overall utility to the supplier. The anticipation of future resources may be made by performing a probabilistic analysis based on the supplier's performance history and/or the probability of a future change in the resources available to the supplier. Preferably the method further comprises allocating the resources in accordance with the said combination of contractual obligations determined.

**Figure 1**

EP 1 296 274 A2

## Description

This invention relates to a method of resource allocation using electronic contracts.

## BACKGROUND TO THE INVENTION

Presently, 80% of business-to-business interactions are contract based. Of this 80% of contract-based interactions, approximately 1% are executed via the Internet, 10% through electronic data interchange (EDI), and 89% in a traditional manner using paper. There is motivation and a desire to increase the number of electronic contracts in use; increasing the proportion of electronic contracts into the remaining 90% of the market.

Electronic contracts, or 'e-contracts', state the terms and conditions of a legally-binding agreement between two parties, and may be both prepared and executed electronically. Contracts (including e-contracts) state the parties' rights and obligations, and typically comprise clauses to be fulfilled (e.g. agreeing to supply a certain quantity of goods by a given date) and penalty clauses stating the penalty that would be incurred by the party should they be in breach of the contract and not fulfil the terms of the contract. The effective management of contracts is very important in commerce and industry, and is particularly critical with respect to the 'just in time' services that are increasingly common today.

A supplier or service provider may be bound simultaneously be a plurality of contracts, all having clauses that are to be fulfilled. However, due to internal or external circumstances, sometimes that supplier may be unable to fulfil all the contractual obligations under which it is bound, and a decision therefore has to be made as to which contracts should be fulfilled and which should not (i.e. how the resources available to the supplier should be allocated). For those contracts that are not fulfilled, the consequences of penalty clauses will inevitably have to be incurred, some of which may be severe. It is therefore essential that the correct decision, as far as is practically possible, should be made in order to optimise the outcome of the resource allocation in the interests of the supplier. Other factors, such as the goodwill existing between the supplier and the customer, also need to be taken into account.

A key benefit of e-contracts is that they can be operated between parties without human intervention. Accordingly, an electronically-executable method for optimally allocating resources in the event of contractual conflicts is required, and it is a general object of the present invention to provide such a method.

## SUMMARY OF THE INVENTION

According to a first aspect of the invention there is provided a method of optimising the allocation of resources by a supplier in the event of the supplier being unable to fulfil one or more of a plurality of contractual obligations, the contractual obligations being defined in electronic contracts, and the method being performed by processing means and comprising: (a) determining the resources due to be allocated in order to fulfil each contractual obligation; (b) determining the gain to the supplier in respect of each contractual obligation were it to be fulfilled; (c) determining the penalty that would be incurred by the supplier in respect of each contractual obligation were it not to be fulfilled; and (d) determining the combination of contractual obligations for which their fulfilment, by the allocation of the said resources, would give the greatest utility to the supplier, utility being defined as the total gain to the supplier as a result of resources allocated minus the total penalty incurred by the supplier as a consequence of unfulfilled contractual obligations. This advantageously provides an automated process by which the utility obtainable by a supplier, from the allocation of limited resources, may be optimised.

The term 'resources' is used herein to refer to the saleable commodity in which the supplier trades, and this may cover both goods and services.

The term 'fulfilment' is used herein to refer to the supply of resources to a customer, thereby satisfying the contractual obligations under which the supplier is bound. Unfulfilment occurs when the contractual obligations are not satisfied, which may well be as a result of insufficient resources.

Optionally, the method further comprises anticipating future resources that will be available to the supplier at some future time, and taking into account the anticipated future resources in determining the combination of contractual obligations for which their fulfilment, at the present time or in the future, would maximise the overall utility to the supplier.

Preferably the anticipation of future resources is made by performing a probabilistic analysis based on the supplier's performance history and/or the probability of a future change in the resources available to the supplier.

Preferably the method further comprises allocating the resources in accordance with the said combination of contractual obligations determined. This advantageously enables the procedure of resource allocation to be entirely automated.

According to a second aspect of the invention there is provided a deadlock resolution agent operable to execute a method in accordance with the first aspect of the invention.

According to a third aspect of the invention there is provided a processor configured to execute a method in accordance with the first aspect of the invention.

According to a fourth aspect of the invention there is provided a computer program operable to execute a method in accordance with the first aspect of the invention.

According to a fifth aspect of the invention there is provided a computer program stored on a data carrier and operable to execute a method in accordance with the first aspect of the invention.

**BRIEF DESCRIPTION OF THE DRAWINGS**

Embodiments of the invention will now be described, by way of example, and with reference to the drawing in which:

Figure 1 illustrates an example of the interoperation of elements of a processor-controlled system for the management and execution of a supplier's electronic contracts; and
Figure 2 illustrates the procedure of operation of a deadlock resolution agent.

**DETAILED DESCRIPTION OF THE PREFERRED EMBODIMENTS OF THE INVENTION**

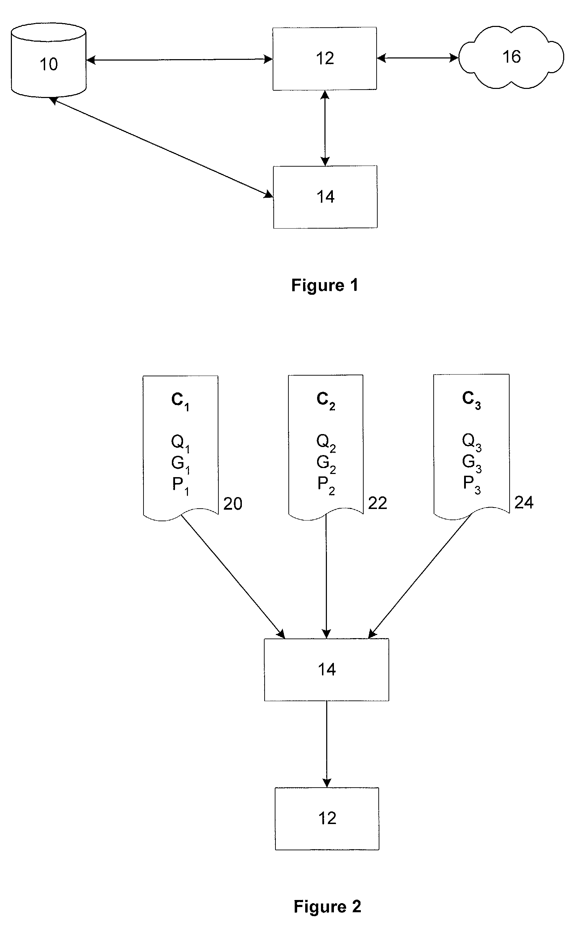

Figure 1 illustrates an example of the interoperation of elements of a processor-controlled system for the management and execution of a supplier's electronic contracts, in accordance with the present invention. The e-contracts are held in a database 10, the contents of which are available to an execution manager 12. The execution manager 12 is responsible for the supply of resources from the supplier to the customers 16.

Instances may arise in which the supplier has insufficient resources to fulfil two or more contracts (or contractual obligations such as specific clauses) for which fulfilment is due. The supplier is thereby faced with a deadlock that must be resolved. To cater for such instances, the contract management system is provided with a deadlock resolution agent 14, which may be brought into operation by the execution manager 12. The deadlock resolution agent 14 is also processor-controlled, and may be provided as an algorithm in a computer program.

The operation of the deadlock resolution agent 14 is illustrated in Figure 2. The agent operates by first obtaining, from the contracts database 10, the details of the contracts 20,22,24 which are unable to be fulfilled. In this example, three contracts are in conflict, but it will be appreciated that the principle of operation of the deadlock resolution agent may be extended to any number of conflicting contracts. From analysing the contracts 20,22,24, three principal parameters for each contract are determined:

(i) the quantity of the resource due to be supplied (denoted respectively by $Q_1$, $Q_2$ and $Q_3$);
(ii) the gain to the supplier (denoted respectively by $G_1$, $G_2$ and $G_3$) were the contract to be fulfilled; and
(iii) the penalty to the supplier (denoted respectively by $P_1$, $P_2$ and $P_3$) were the contract not to be fulfilled.

The deadlock resolution agent 14 operates by evaluating the combination of the contracts 20,22,24 for which their fulfilment would give the maximum utility to the supplier. The term 'utility' is defined herein as being the total gain to the supplier as a result of resources allocated minus the total penalty incurred by the supplier as a consequence of unfulfilled contractual obligations.

An example of an algorithm for maximising utility is described in mathematical terms below. Qualitatively, given the parameters determined above, the deadlock resolution agent determines which contracts should be fulfilled and which should not, given the total resources available to the supplier. Some contracts may only be able to be satisfied either fully or not at all, whilst others may be able to be partially fulfilled. For example, a contract relating to the supply of iron ore (or another such bulk cargo) may be partially fulfilled by supplying some ore, but less than the amount for which the supplier was contracted. On the other hand, a contract for a car dealer to deliver a car may only be fulfilled completely or not at all.

Numerical analysis (or analytical analysis if possible) is used to select contracts for fulfilment (either completely or partially) so as to maximise the total gain to the supplier and to minimise the total penalty incurred - i.e. to maximise the utility. Partial fulfilment of contracts, where possible, is essentially a means by which a compromise between customers may be reached, and it will be appreciated that this may often be the optimum way in which a deadlock may be resolved.

The combination of contracts for which the utility is maximised for the supplier is then provided to the execution manager 12 for implementation. This may be effected automatically within the contract management and execution system, or alternatively the output from the deadlock resolution agent may be provided to a human for their approval.

If the deadlock resolution agent is unable to resolve the deadlock, due to there being a plurality of outcomes for which the utility to the supplier would be the same, then a human decision is sought. Such a human decision may readily take into account factors unbeknown to the automated system, such as the goodwill between the parties, the degree to which the supplier is keen to ensure that a certain customer's needs are met, and whether or not the supplier could afford to lose the favour of a particular customer if their requirements are not met.

A simpler deadlock resolution agent may simply select for fulfilment those contracts having the most severe penalty clauses.

More sophisticated algorithms, still in accordance with the present invention, may alternatively be employed to take into account additional parameters associated with each contract. Examples of such additional parameters would be a quantitative representation of the degree of goodwill existing between the supplier and the customer, and the credit history between the two parties. Other factors, such as the time by which a supply is overdue, or the quantity of the resources that have successfully been supplied, may also affect the determination of the gain and penalty in respect of a given contract, and must therefore also be taken into account when determining the fulfilment of contracts so as to maximise utility.

*Examples of mathematical algorithms operable by the deadlock resolution agent to maximise utility*

Consider a set of $n$ contracts due for fulfilment on a specific occasion, where $n$ is a natural number. The contracts are held in electronic form in a database 10, and the fulfilment (or otherwise) of the contracts is managed by an execution manager 12.

Each contract is denoted by $C_i$, where $i$ is an integer defined by $0 < i \leq n$. For a given contract $C_i$ the supplier is contractually obliged to supply a quantity $Q_i$ of a resource, for a gain to the supplier of $G_i$ conditional on the complete fulfilment of $C_i$. If the contract $C_i$ is not fulfilled, however, the supplier is penalised by a penalty clause, with the penalty for complete unfulfilment of $C_i$ being denoted by $P_i$.

Let the total quantity of the resource available to the supplier be denoted by $R$. If $R$ is sufficient to fulfil all $n$ contracts, i.e.

$$\sum_{i=1}^{n} Q_i \leq R ,$$

then all the contracts will indeed be fulfilled, for a total gain to the supplier of

$$\sum_{i=1}^{n} G_i ,$$

and the resource is delivered by the execution manager 12 to the customers 16 as required.

However, if the total resource held by the supplier is less than the total resource that it is obliged to supply

$$\text{(i.e. } \sum_{i=1}^{n} Q_i > R ),$$

a deadlock results, and this is then handled by the deadlock resolution agent 12.

The deadlock resolution agent 12 analyses the content of the $n$ contracts (e.g. 20,22,24 in Figure 2), obtaining values for $Q_i$, $G_i$ and $P_i$.

Since all the contracts are unable to be fulfilled, the purpose of the deadlock resolution agent is to determine the optimum combination of contracts that should be fulfilled, given the limited available resource $R$, so as to maximise the total gain $G_T$ to the supplier and to minimise the total penalty $P_T$ incurred. The difference between the total gain and the total penalty is known as the utility $U$. That is to say, $U = G_T - P_T$.

Fractions $f_i$ are used by the deadlock resolution agent to determine the fraction of each quantity $Q_i$ that will be supplied to the customers, such that the utility $U$ is maximised. If partial fulfilment of a contract $C_i$ is possible, then $f_i$ may take any value in the range $0 \leq f_i \leq 1$. However, if partial fulfilment of a contract $C_i$ is not possible (i.e. it must either be completely fulfilled or not at all) then $f_i$ is effectively a binary function taking a value of either 1 (for complete fulfilment of $C_i$) or 0 (for complete unfulfilment of $C_i$).

Since the deadlock resolution agent is constrained to working with a limited total resource $R$, the resulting distribution of the available resource must not exceed $R$. The distribution of $R$ is therefore constrained by the condition that:

$$\sum_{i=1}^{n} f_i Q_i \le R \qquad \qquad \text{[Equation 1]}$$

Now, in this example the total gain $G_T$ is given by the sum of the gains that result from each contract that is fulfilled. That is to say,

$$G_T = \sum_{i=1}^{n} f_i G_i \; .$$

Similarly, the total penalty $P_T$ is given by the sum of the penalties that result from each contract that is unfulfilled. That is to say,

$$P_T = \sum_{i=1}^{n} (1 - f_i) P_i \; .$$

The utility $U$ is thereby given by:

$$U = \sum_{i=1}^{n} f_i G_i - \sum_{i=1}^{n} (1 - f_i) P_i \qquad \qquad \text{[Equation 2]}$$

The deadlock resolution agent is configured to perform a numerical (or, if possible, analytical) analysis to determine values for the fractions $f_i$ in order to maximise the utility $U$ as defined in Equation 2, whilst obeying the constraint defined in Equation 1. The engineering of software routines suitable for performing numerical (or analytical) optimisation of functions such as these will be known to those skilled in the art.

In the mathematical example given above, it has been assumed that the gain $G_i$ and the penalty $P_i$ are both independent of the fraction $f_i$ of $Q_i$ that is supplied. However, more complex functions for $G_i$ and $P_i$ are possible, and may be incorporated in the operation of the deadlock resolution agent. For example, both $G_i$ and $P_i$ may themselves depend on both the fraction $f_i$ supplied and the time taken $t_i$ to supply the resources in question. That is to say, $G_i = G_i(f_i,t_i)$ and $P_i = P_i(f_i,t_i)$. These functions may vary in a linear or non-linear manner. For example, the penalty $P_i$ may vary linearly with time over the first 20 days in which the supply is overdue, and thereafter in an escalating, non-linear manner. Likewise, an almost-complete fulfilment of a contract may incur only a small penalty, whereas a substantially incomplete fulfilment would incur a very severe penalty.

Given the possibility of non-linear dependencies as discussed above, it follows that, in such cases, the future resources available to the supplier must also be taken into account by the deadlock resolution agent. Accordingly, the deadlock resolution agent may be provided with details of the future resources available to the supplier, or alternatively a prediction of the future resources may be made. Such a prediction may be made using probabilistic analysis, based on the supplier's performance history or an anticipated increase in available resources. For example, if there is a high probability of the supplier being able to completely fulfil a contract within a short time after the due date, then the utility may be able to be maximised by supplying of a small quantity of resources to the customer by the due date, and then by delivering the remainder as soon as it is available, after the due date. Although it is understood that a penalty will be incurred, the anticipation of there being sufficient resources for complete fulfilment within a short period after the due date may enable the overall utility to the supplier to be maximised.

The application of the deadlock resolution agent is therefore not limited to the allocation of resources at the time of the deadlock, but is also useful in determining how anticipated resources should be distributed in the future.

The methodology described herein may also be applied to other processes in connection with electronic contracts. In particular, the methodology is of use in the formation and negotiation of contracts. For example, the methodology may be used in predictive modelling and simulation, to predict how a supplier may be able to comply with the requirements of a new or proposed contract. By inputting details of the resources that the new contract would require to be supplied, together with the corresponding gains and penalties to the supplier, it is possible to use the methodology to simulate the supplier's capability to meet this and other (possibly pre-existing) contractual obligations.

In the context of contract negotiation, from the supplier's point of view the output of this methodology may be used to evaluate if one contract could potentially give the supplier greater utility than another contract. This would potentially of great benefit to a supplier faced with a number of possible contracts and required to make a decision as to which contracts would be beneficial for it to accept, and which would be advantageous to decline.

**Claims**

1.    A method of optimising the allocation of resources by a supplier in the event of the supplier being unable to fulfil one or more of a plurality of contractual obligations, the contractual obligations being defined in electronic contracts (20, 22, 24), and the method being performed by processing means and comprising:

   (a) determining the resources due to be allocated in order to fulfil each contractual obligation;
   (b) determining the gain to the supplier in respect of each contractual obligation were it to be fulfilled;
   (c) determining the penalty that would be incurred by the supplier in respect of each contractual obligation were it not to be fulfilled; and
   (d) determining the combination of contractual obligations for which their fulfilment, by the allocation of the said resources, would give the greatest utility to the supplier, utility being defined as the total gain to the supplier as a result of resources allocated minus the total penalty incurred by the supplier as a consequence of unfulfilled contractual obligations.

2.    A method as claimed in Claim 1 further comprising anticipating future resources that will be available to the supplier at some future time, and taking into account the anticipated future resources in determining the combination of contractual obligations for which their fulfilment, at the present time or in the future, would maximise the overall utility to the supplier.

3.    A method as claimed in Claim 2 wherein the anticipation of future resources is made by performing a probabilistic analysis based on the supplier's performance history and/or the probability of a future change in the resources available to the supplier.

4.    A method as claimed in any preceding Claim further comprising allocating the resources in accordance with the said combination of contractual obligations determined.

5.    A deadlock resolution agent operable to execute a method as claimed in any of Claims 1 to 4.

6.    A processor configured to execute a method as claimed in any of Claims 1 to 4.

7.    A computer program operable to execute a method as claimed in any of Claims 1 to 4.

8.    A computer program stored on a data carrier and operable to execute a method as claimed in any of Claims 1 to 4.

**Figure 1**

**Figure 2**